(19) Europäisches Patentamt / European Patent Office / Office européen des brevets

(11) **EP 3 599 717 B1**

(12) **FASCICULE DE BREVET EUROPEEN**

(45) Date de publication et mention
de la délivrance du brevet:
**18.11.2020 Bulletin 2020/47**

(51) Int Cl.:
***H02S 50/15*** ***(2014.01)***

(21) Numéro de dépôt: **19183051.2**

(22) Date de dépôt: **27.06.2019**

(54) **CARACTERISATION OPTIQUE D'UN COEFFICIENT DE BIFACIALITE DE MODULE PHOTOVOLTAÏQUE BIFACIAL**

OPTISCHE CHARACTERISIERUNG EINES KOEFFIZIENTES VON BEIDSEITIGKEIT EINES BEIDSEITIGEN SOLAMODULS

OPTICAL CHARACTERISATION OF A COEFFICIENT OF BI-FACIALITY OF A BIFACIAL SOLAR MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2018 FR 1857036**

(43) Date de publication de la demande:
**29.01.2020 Bulletin 2020/05**

(73) Titulaire: **Electricité de France
75008 Paris (FR)**

(72) Inventeur: **EL HAJJE, Gilbert
92200 Neuilly-sur-Seine (FR)**

(74) Mandataire: **Plasseraud IP
66, rue de la Chaussée d'Antin
75440 Paris Cedex 09 (FR)**

(56) Documents cités:
**US-A1- 2014 043 056**

- **HO JIAN WEI ET AL: "Evaluating Performance Loss and Predicting Efficiency Gain of Bifacial Silicon Solar Cells", 2018 IEEE 7TH WORLD CONFERENCE ON PHOTOVOLTAIC ENERGY CONVERSION (WCPEC) (A JOINT CONFERENCE OF 45TH IEEE PVSC, 28TH PVSEC & 34TH EU PVSEC), IEEE, 10 juin 2018 (2018-06-10), pages 3484-3488, XP033456345, DOI: 10.1109/PVSC.2018.8547708**

## Description

La présente invention concerne une caractérisation optique, quantitative, de modules photovoltaïques bifaciaux.

Les modules photovoltaïques bifaciaux recueillent non seulement la lumière du soleil sur le côté faisant face au soleil, mais ils recueillent également la lumière diffuse sur la face arrière qui est réfléchie par la surface sous le panneau solaire et par l'environnement (herbe, sable, terre ou autre). Les modules bifaciaux peuvent générer un rendement de production supplémentaire, allant de 10 à 30%, par rapport aux modules monofaciaux. Le document HO JIAN WEI ET AL: "Evaluating Performance Loss and Predicting Efficiency Gain of Bifacial Silicon Solar Cells",2018 IEEE 7TH WORLD CONFERENCE ON PHOTOVOLTAIC ENERGY CONVERSION (WCPEC) (A JOINT CONFERENCE OF 45TH IEEE PVSC, 28TH PVSEC & 34TH EU PVSEC), IEEE, 10 juin 2018 (2018-06-10), pages 3484-3488, XP033456345,DOI: 10.1109/PVSC.2018.8547708, décrit des caractérisations de modules photovoltaïques.

Les modules photovoltaïques bifaciaux, par exemple à base de silicium cristallin, acquièrent ainsi un intérêt croissant dans l'industrie photovoltaïque en raison de leur capacité à induire une amélioration significative de la production photovoltaïque à coûts de fabrication égal, par rapport aux modules photovoltaïques monofaciaux à base de silicium cristallin également.

Un paramètre de performance clé de cette technologie est le coefficient dit de « bifacialité » du module photovoltaïque. En particulier, un tel coefficient quantifie la différence de performance entre les deux faces actives du module. Plus précisément, il s'agit d'établir le rapport entre l'énergie photovoltaïque produite par la face arrière du module et celle produite par la face avant du module, sous une même intensité lumineuse incidente. Pratiquement, cette différence, qui est de l'ordre de 30%, est intrinsèque à cette technologie pour des raisons dues principalement à une différence de qualité des matériaux photovoltaïques du module entre les deux faces de ce dernier. Ainsi, une caractérisation fiable de ce coefficient de bifacialité est souhaitable notamment pour améliorer les techniques de fabrication de tels modules bifaciaux, en recherchant typiquement une reproductibilité de la qualité des matériaux à la fois sur les deux faces du module.

Ce coefficient de bifacialité, noté $\beta$ ci-après, peut être exprimé sous trois formes de ratios différents (sa valeur étant comprise entre 0 et 100%) :

- Comme le rapport entre les puissances électriques générées par la face arrière $P_{arr}^{elec}$ et la face avant $P_{avant}^{elec}$ respectivement :

$$\beta = \frac{P_{arr}^{elec}}{P_{avant}^{elec}} x100 \qquad\qquad (1)$$

- Comme le rapport entre les tensions électriques maximales de circuit-ouvert de la face arrière $Voc_{arr}^{elec}$ et face avant $Voc_{avant}^{elec}$ respectivement :

$$\beta = \frac{Voc_{arr}^{elec}}{Voc_{avant}^{elec}} x100 \qquad\qquad (2)$$

- Ou encore comme le rapport entre les courants de court-circuit de la face arrière $Jsc_{arr}^{elec}$ et face avant $Jsc_{avant}^{elec}$ respectivement :

$$\beta = \frac{Jsc_{arr}^{elec}}{Jsc_{avant}^{elec}} x100 \qquad\qquad (3)$$

Naturellement, plus ce coefficient de bifacialité est important, plus les gains de production photovoltaïque, via cette bifacialité, sont importants.

De nos jours, aucune technique ou norme n'offre de généraliser et d'uniformiser les moyens de mesure de ce coefficient de bifacialité. En particulier, cette mesure est faite jusqu'à présent de manière électrique. Un simulateur solaire (lampe à émission homogène permettant de reproduire, en intensité et en information spectrale, le spectre solaire défini selon le sigle A.M. 1.5) de puissance 1000 W/m², éclaire alternativement chacune des deux faces, en gardant l'autre face complétement à l'obscurité, souvent à l'aide d'un drap noir. Suite à cette excitation lumineuse, chaque face génère sa propre puissance photovoltaïque qui est ensuite mesurée. Le coefficient β est ensuite calculé en appliquant la formule (1).

Une telle technique souffre de plusieurs limitations, l'empêchant de constituer une norme générale pour la mesure de β.

En effet, il est impossible en pratique de garantir une répétabilité et une cohérence des mesures car le milieu ambiant du module (relativement à la luminosité notamment), ainsi que la nécessité d'isoler mécaniquement (et ce de manière approximative) l'une des deux faces du modules, induisent des incertitudes inacceptables au niveau du calcul du coefficient β.

En outre, la mesure étant de nature électrique, elle correspond donc à une moyenne de β sur l'ensemble du module. Alors qu'en réalité, un module photovoltaïque possède des caractéristiques qui présentent une certaine inhomogénéité spatiale, ce qui est par conséquent notamment le cas du coefficient β. En faisant une moyenne spatiale électrique, l'information quant au comportement spatial de β est perdue. Or, cette information est importante pour estimer le lien entre la qualité du module photovoltaïque et son coefficient β. Elle permettrait typiquement d'identifier des zones intéressantes du module souffrant par exemple d'une mauvaise qualité du matériau photovoltaïque, induisant à son tour une amélioration du procédé de fabrication des modules bifaciaux.

La présente invention vient améliorer la situation.

Elle propose à cet effet un procédé de caractérisation optique de la qualité d'un module photovoltaïque bifacial.

Le module comporte une première face, active, et une deuxième face, active, opposée à la première face.

Le module comporte en outre, sur chacune desdites première et deuxième faces, un empilement de couches comportant au moins une couche d'un matériau semi-conducteur à propriétés photovoltaïques et ayant une largeur de bande interdite.

Le procédé comprend alors:

- éclairer une pluralité d'éléments de surface de chaque face à l'aide d'une source lumineuse comprenant au moins une longueur d'onde inférieure à la longueur d'onde de la largeur de bande interdite et mesurer une intensité de photoluminescence émise par chaque élément de surface de cette face à au moins la longueur d'onde de la largeur de bande interdite,

- en fonction de la mesure d'intensité de photoluminescence émise par chaque élément de surface de chaque face, estimer un paramètre de performance photovoltaïque pour cet élément de surface,

- pour chaque élément de surface, estimer un coefficient de bifacialité comparant le paramètre de performance photovoltaïque de chaque élément de surface de la première face avec le paramètre de performance photovoltaïque d'un élément de surface homologue de la deuxième face, disposé sous l'élément de surface de la première face, et

- établir une cartographie du coefficient de bifacialité du module.

On obtient ainsi une cartographie du coefficient de bifacialité, par une méthode optique et non destructive, avec ainsi une possibilité de déterminer une éventuelle inhomogénéité dans l'espace des caractéristiques des couches photovoltaïques, ce qui peut permettre alors d'améliorer la qualité de leurs dépôts.

Dans une forme de réalisation, le paramètre de performance photovoltaïque est une tension de circuit-ouvert maximale (notée $V_{OC}(x,y)$ ci-après).

Dans cette réalisation, la tension de circuit-ouvert maximale $V_{OC}(x, y)$, en un élément de surface de coordonnées $(x,y)$, est liée à une grandeur $\Phi_{PL}(E,x,y)$ représentative de l'intensité de photoluminescence émise par cet élément de surface par une relation du type

$$\Phi_{PL}(E, x, y) = A(E, x, y)\phi_{bb}(E)\left[\exp\left(\frac{qV_{oc}(x, y)}{kT}\right) - 1\right] \qquad (4)$$

Où $E$ est une énergie de photon émis, $A(E,x,y)$ est une absorptivité du module photovoltaïque, $\phi_{bb}(E)$ est le flux du corps noir, $q$ est la charge élémentaire, k la constante de Boltzmann et $T$ est la température du module pour chacune des faces actives.

On lie ainsi un paramètre caractérisant la couche, en l'espèce la tension de circuit-ouvert maximale $V_{OC}(x, y)$, à l'intensité de photoluminescence émise et mesurée ici. Typiquement, comme la source lumineuse comprend au moins une longueur d'onde inférieure à la longueur d'onde de la largeur de bande interdite, l'absorptivité du module photovoltaïque *A(E,x,y)* est, en pratique, égale à 1.

Dans une telle réalisation, le coefficient de bifacialité pour un élément de surface de la première face et un élément de surface homologue de la deuxième face est alors donné par un rapport β des tensions électriques de circuit-ouvert maximales de l'élément homologue de la deuxième face $Voc_{arr}^{elec}$ et de l'élément de la première face $Voc_{avant}^{elec}$ selon une relation du type :

$$\beta = \frac{Voc_{arr}^{elec}}{Voc_{avant}^{elec}} x100$$

Par ailleurs, de façon générale, on compte le nombre de photons reçus par le détecteur de lumière recevant l'émission par photoluminescence pour en déduire un paramètre de performance photovoltaïque tel que par exemple la tension maximale de circuit-ouvert, comme présenté ci-dessus. Il est préférable alors que le procédé comporte en outre une calibration du détecteur recevant l'intensité de lumière émise par photoluminescence et qui compte en particulier un nombre de photons correspondant à la lumière émise par photoluminescence. Ainsi, l'étape de calibration précitée comporte par exemple :

- éclairer le détecteur par une source laser, constante (préférentiellement dont la longueur d'onde et la puissance lumineuse surfacique peuvent être connues), et mesurer une grandeur représentative d'un nombre étalon de photons reçus par le détecteur, et

- la photoluminescence émise par un élément de surface de la première face et par un élément de surface homologue de la deuxième face correspondant respectivement à des premier et deuxième nombres de photons reçus par le détecteur, diviser chacun desdits premier et deuxième nombres de photons reçus par le détecteur par la grandeur représentative dudit nombre étalon.

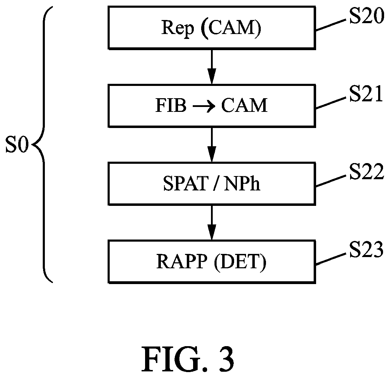

Cette grandeur représentative de ce nombre étalon peut être un rapport « coups » (de lumière) reçus sur le détecteur par nombre de photons reçus, comme on le verra plus spécifiquement en référence à l'étape S23 décrite plus loin en référence à la figure 3.

D'autres paramètres de performance photovoltaïque que la tension maximale de circuit-ouvert peuvent être choisis, comme par exemple la puissance électrique produite et le coefficient de bifacialité est alors défini comme un rapport β entre les puissances électriques produites respectivement par un élément de surface homologue de la deuxième face $P_{arr}^{elec}$ et un élément de surface correspondant de la première face $P_{avant}^{elec}$ selon une relation du type :

$$\beta = \frac{P_{arr}^{elec}}{P_{avant}^{elec}} x100 \tag{1}$$

En outre, le paramètre de performance photovoltaïque peut être le courant de court-circuit $J_{SC}(x,y)$ et le coefficient de bifacialité est défini comme un rapport β entre les courants de court-circuit respectivement d'un élément de surface homologue de la deuxième face $Jsc_{arr}^{elec}$ et un élément de surface correspondant de la première face $Jsc_{avant}^{elec}$ selon une relation du type :

$$\beta = \frac{Jsc_{arr}^{elec}}{Jsc_{avant}^{elec}} x100 \tag{3}$$

La présente invention vise aussi un dispositif de caractérisation optique de la qualité d'un module bifacial de panneau photovoltaïque bifacial, pour la mise en œuvre du procédé ci-avant, et comportant :

- un banc de montage en rotation supportant le module, et capable d'appliquer une rotation de 180° du module autour d'un axe central et parallèle à un bord du module,

- une source lumineuse focalisée déplaçable par pas de distance choisi, pour éclairer une pluralité d'éléments de surface de chaque face, et comprenant au moins une longueur d'onde inférieure à la longueur d'onde de la largeur de bande interdite,

- une optique de détection de lumière, déplaçable par le pas de distance choisi, pour mesurer une intensité de photoluminescence émise par chaque élément de surface de chaque face à au moins la longueur d'onde de la largeur de bande interdite,

- et un circuit de traitement pour :

* estimer, en fonction de la mesure d'intensité de photoluminescence émise par chaque élément de surface de chaque face, le paramètre de performance photovoltaïque ( $V_{OC}(x,y)$ ; $J_{SC}(x,y)$ ; $P_{elec}(x,y)$) pour cet élément de surface,

* pour chaque élément de surface, estimer un coefficient de bifacialité comparant le paramètre de performance photovoltaïque de chaque élément de surface de la première face avec le paramètre de performance photovoltaïque d'un élément de surface homologue de la deuxième face, disposé sous l'élément de surface de la première face, et

* établir la cartographie du coefficient de bifacialité du module.

Le dispositif peut comporter en outre un filtre optique coupe-bande autour de la longueur d'onde d'éclairement de la source lumineuse et disposé sur la face du module ne recevant pas l'éclairement de la source. Dans une réalisation, ce filtre optique coupe-bande peut être formé d'un réseau de microlentilles (spectralement sélectif), placé devant la face ne recevant pas l'éclairement.

Le dispositif peut comporter en outre un filtre optique passe-haut disposé devant le détecteur pour filtrer les longueurs d'onde de la source lumineuse d'excitation.

Par ailleurs, le détecteur précité peut comporter une caméra infrarouge (et éventuellement une optique de focalisation sur l'entrée de la caméra).

La présente invention vise aussi un programme informatique comportant des instructions pour la mise en œuvre des étapes du procédé ci-avant que met en œuvre le circuit de traitement précité, lorsque ces instructions sont exécutées par un processeur d'un tel circuit de traitement.

D'autres avantages et caractéristiques de l'invention apparaîtront à la lecture de la description détaillée ci-après d'exemples de réalisation possibles de l'invention et à l'examen des dessins annexés sur lesquels :

- La figure 1 illustre un dispositif de caractérisation optique d'un module photovoltaïque bifacial, selon un mode de réalisation de l'invention,
- La figure 2 illustre les étapes principales d'un procédé de caractérisation optique d'un module photovoltaïque bifacial, selon un mode de réalisation de l'invention,
- La figure 3 illustre des opérations préalables de calibration, pour le procédé de caractérisation optique de la figure 2, selon un exemple de réalisation de l'invention.

La présente invention propose d'obtenir une cartographie optique, fiable et sans contact du coefficient de bifacialité, basée sur la mesure de la photoluminescence d'un module photovoltaïque bifacial.

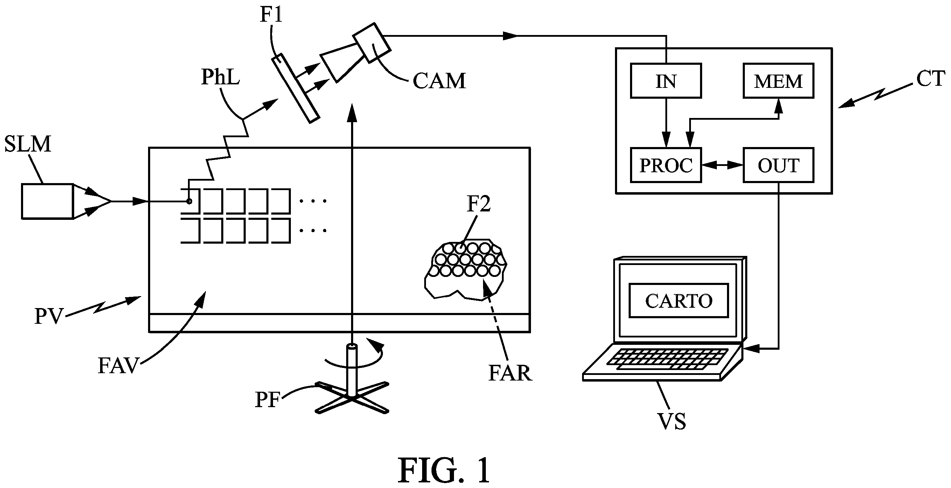

Dans un mode de réalisation, il est proposé un dispositif tel qu'illustré sur la figure 1 pour établir ce type de mesure. En particulier, le module photovoltaïque est noté PV et sa première face en cours de caractérisation optique est notée FAV, tandis que la deuxième face, opposée à la première, est notée FAR. Une source lumineuse SLM éclaire la face FAV avec au moins une longueur d'onde inférieure au gap du matériau photovoltaïque de la face FAV du module, ce qui provoque une émission de lumière par photoluminescence PhL, laquelle est détectée par un détecteur CAM (par exemple une caméra). L'éclairage par la source d'excitation SLM peut être focalisé sur un élément de surface de la face FAV, et la source SLM peut être déplacée par pas successifs, avec le détecteur CAM, pour couvrir toute la surface de la face FAV du module PV. En variante, la source SLM n'est pas focalisée et son faisceau couvre de façon homogène toute la surface du module PV, et l'usage d'une caméra à photosites, en tant que détecteur CAM, permet d'acquérir l'image de photoluminescence émise par les différents éléments de surface formant la face FAV du module. Cette deuxième forme de réalisation peut être avantageuse pour mesurer rapidement toute l'émission par photoluminescence d'une face (simultanément).

Dans l'une ou l'autre de ces réalisations, les signaux de photoluminescence émis par les différents éléments de surface sont stockés en mémoire MEM d'un circuit de traitement CT, comportant :

- Une interface d'entrée IN, pour recevoir les émissions de photoluminescence par les différents éléments de surface de la face FAV,
- La mémoire précitée MEM, pour stocker les mesures de photoluminescence des différents éléments de surface, ainsi que des instructions d'un programme informatique au sens de l'invention pout traiter ces mesures et conduire à une cartographie du coefficient de bifacialité CARTO comme décrit plus loin,
- Un processeur PROC pour traiter les données de mesures stockées dans la mémoire MEM, en exécutant le programme au sens de l'invention,
- Et une interface de sortie OUT, reliée par exemple à un outil de visualisation VS de la cartographie du coefficient de bifacialité établie par le processeur PROC.

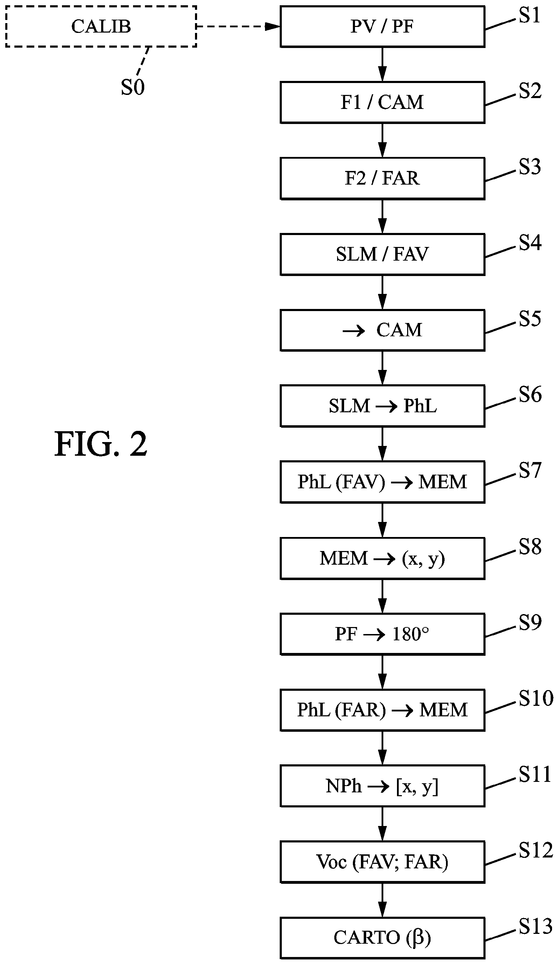

Ainsi, l'invention propose une approche optique pour obtenir la mesure du coefficient $\beta$ dont les étapes de réalisation peuvent être les suivantes, en référence maintenant à la figure 2.

A l'étape S1, un module photovoltaïque bifacial est fixé (par exemple dans une position horizontale), avec les deux faces totalement exposées et visibles, sur la plateforme PF de la figure 1. Préférentiellement, la plateforme PF sur laquelle est posé et fixé le module PV, est en partie mobile, capable d'effectuer des rotations de 180 degrés par rapport à un axe central parallèle à un bord du module (ici un axe central vertical).

A l'étape S2, devant la caméra CAM, on positionne un filtre optique F1 (figure 1), passe-haut en longueur d'onde dont la longueur d'onde de coupure est supérieure à une longueur d'onde d'éclairage de la face à caractériser. Par exemple cette longueur d'onde de coupure peut correspondre à 750 nanomètres. Par ailleurs, la caméra CAM peut être une caméra infrarouge.

On applique ainsi un filtre de toutes les réflexions parasites de la lumière incidente (ou encore de diffusion) qui peuvent intervenir en éclairant la face à caractériser du module. Ainsi, seule la lumière issue de la photoluminescence de la face éclairée est recueillie.

A l'étape S3, on place un filtre coupe-bande F2 (figure 1) filtrant la longueur d'onde d'éclairage du module, sur la face FAR du module non exposée à cet éclairage. Il peut s'agir d'un filtre coupant la bande du visible par exemple (si la longueur d'onde d'éclairage est de 532nm ou 680nm, comme on le verra plus loin). A cet effet, un réseau de microlentilles spectralement sélectif avec une orientation choisie des microlentilles peut être placé devant la face non exposée à l'éclairage pour jouer ce rôle de filtre coupe-bande. Ce filtre couvre préférentiellement la totalité du module, de façon à bien l'isoler optiquement, éliminant ainsi les parasites de diffusion et de réflexion de lumière sur la face arrière.

A l'étape S4, on place la source lumineuse SLM, par exemple monochromatique (préférentiellement puissante, par exemple une diode luminescente à haute puissance ou un laser), ayant une longueur d'onde d'excitation de 532 nanomètres ou 680 nanomètres, pour lesquels l'absorptivité du module photovoltaïque, en silicium typiquement, est très proche de 100%. Cette source est placée au-dessus du module photovoltaïque bifacial selon un angle de 45 degrés par exemple.

A l'étape S5, on place un système optique de formation d'image couplé à la caméra CAM dont la sensibilité spectrale appartient à une plage spectrale allant de 800 nanomètres jusqu'à 1700 nanomètres, au-dessus du module photovoltaïque bifacial selon un angle de 45 degrés du côté opposé à celui de la source d'excitation SLM.

A l'étape S6, on illumine, de façon homogène, la face avant du module photovoltaïque PV avec une densité de puissance lumineuse comprise entre 600 W/m$^2$ et 1200 W/m$^2$, dans le but d'exposer le module photovoltaïque à des conditions réalistes d'illumination.

Cette excitation induit alors une émission lumineuse liée au phénomène de photoluminescence et la caméra CAM enregistre à l'étape S7, dans la mémoire MEM, une image de la photoluminescence de la face éclairée.

Plus particulièrement, dans une réalisation, l'éclairage est focalisé sur un élément de la face du module formant un « pixel ». La source SLM et la caméra CAM sont déplaçables ensemble au-dessus de la surface éclairée du module afin d'obtenir un niveau de la photoluminescence en chaque point de coordonnées (x,y) de la surface précitée, et ce niveau de photoluminescence en chaque point est stocké dans la mémoire MEM en correspondance des coordonnées (x,y) de ce point, à l'étape S8 pour une première face du module. On obtient ainsi « l'image de photoluminescence » de la face avant, avec un niveau de couleur par exemple représentant le niveau de photoluminescence, par élément de la face du module éclairé représentant alors un pixel. On peut prévoir en outre une couleur particulière par longueur d'onde de lumière de photoluminescence autour de la longueur d'onde du gap (par exemple du rouge, orange, jaune, ..., bleu, violet, avec la longueur d'onde du gap en jaune, et des intensités de couleur proportionnelles à l'intensité de photoluminescence mesurée par la caméra pour chaque gamme de longueur d'onde autour de celle du gap).

Le niveau de photoluminescence précité peut être par exemple une intensité de photoluminescence au pic de photoluminescence identifié. En principe, plus l'intensité de photoluminescence est élevée au pic et plus les états intermédiaires entre la bande de conduction et la bande de valence sont absents, ce qui signifie que le matériau photovoltaïque est plus pur (sans atomes étrangers ou lacunes ou dislocations, ou autres) et donc de meilleure qualité. Le niveau de photoluminescence peut être alternativement une largeur à mi-hauteur du pic (ce qui donne un indice encore sur la qualité, plus le matériau étant pur et plus cette largeur à mi-hauteur étant réduite). Le « niveau » de photoluminescence précité peut être encore alternativement une combinaison de tout ou partie de ces paramètres.

La prochaine étape S9 consiste à activer la rotation de la plateforme support du module d'un angle de 180 degrés pour effectuer une permutation des positions des deux faces du module. Ainsi, on illumine de façon homogène la « face arrière » du module photovoltaïque qui est alors exposée à l'éclairage monochromatique. De même ici, à l'étape S10, on peut enregistrer une « image » (pixels par pixels) de la photoluminescence de la face arrière du module photovoltaïque bifacial.

Dans l'exemple présenté ci-après, les intensités de photoluminescence mesurées sont stockées en mémoire pour différentes longueurs d'onde autour de celle du gap. Plus précisément, les deux « images » de photoluminescence obtenues pour les faces respectives du module ont des pixels dont les intensités sont exprimées en unité arbitraire. Il s'agit donc de transformer cette intensité de photoluminescence arbitraire en une unité absolue d'intensité de photoluminescence dont l'unité est celle du flux exact de photons formant cette intensité de photoluminescence, soit plus précisément : un nombre de photons Nph par unité de longueur d'onde et par unité de surface et par seconde (Nph/m.m$^2$.s).

A cet effet, il est proposé ici une calibration absolue des intensités des images de photoluminescence obtenues. Pratiquement, cette étape, référencée S0 sur la figure 2, peut être réalisée à tout moment qui précède l'application des mesures précitées. Elle peut être exécutée, non pas avant chaque mesure d'un module, mais le système peut être étalonné régulièrement au sens de l'étape S0 (par exemple une fois par an). Cette calibration permet d'extraire le ratio entre le nombre de coups (unité arbitraire d'intensité) et le nombre de photons (unité absolue). Un tel ratio est intrinsèque à l'optique du système et indépendant du module photovoltaïque. On établit ainsi la relation entre le nombre de coups mesurés par la caméra d'acquisition et le nombre de photons effectivement émis par une source d'émission connue. Il faut donc mesurer une source d'intensité connue et à cet égard plusieurs possibilités sont envisageables :

- en utilisant une sphère intégrante avec une lampe calibrée ou un laser, il est alors possible de mesurer l'intensité en sortie de la sphère, mais difficile de déterminer le nombre de photons effectivement collectés ;

- en utilisant une fibre dans laquelle est injecté un faisceau laser, il est plus facile de réaliser la calibration en établissant alors l'image de la sortie de la fibre (l'ouverture numérique d'une fibre (NA) étant connue, il suffit de la prendre suffisamment faible par rapport à l'ouverture numérique de l'objectif de la caméra pour collecter toute l'intensité (par exemple, NA$_{fibre}$=0,4 et NA$_{objectif}$=0,8)).

Cette opération de calibration S0 peut être réalisée en plusieurs étapes, comme illustré sur la figure 3 :

- une étape éventuelle S20 d'étalonnage/calibration du détecteur lui-même, par une mesure de réponse du détecteur dans les mêmes conditions d'acquisition que les images de photoluminescence afin de déterminer déjà une réponse intrinsèque du détecteur dans de mêmes conditions de mesure,

- à l'étape S21, une image du cœur de la fibre est mesurée, puis divisée par l'image de réponse précédente afin de calibrer déjà spatialement les images obtenues (la puissance en sortie de fibre peut être mesurée au même moment, en veillant à ce que la sortie de fibre reste exactement dans la même position),

- à l'étape S22, l'image est ensuite intégrée spatialement pour donner finalement un nombre de coups qui correspond au nombre de photons émis par le faisceau laser, mesuré précédemment,

- à l'étape S23, on trouve alors un rapport coups/photons (connaissant la puissance du laser, sa longueur d'onde et le temps d'acquisition), par lequel il convient de diviser pixel par pixel, toutes les images de photoluminescence obtenues afin d'avoir une unité en photons absolues.

Ce rapport est valable en tout point de l'espace et du spectre, puisque l'intensité obtenue est déjà intégrée spectralement par la caméra dans sa gamme de détection qui s'étend de 800 nanomètres jusqu'à 1700 nanomètres.

En revenant maintenant à la figure 2, une fois les images de photoluminescence obtenues à l'étape S10, elles sont ramenées en unité absolues d'intensité (photons/m.m$^2$.s) à l'étape S11, et il est possible alors de déterminer pour chaque face une cartographie $\beta(x,y)$ du coefficient de bifacialité du module photovoltaïque. Il s'agit donc d'appliquer l'une des expressions (1), (2) et (3) présentées ci-avant.

Pour transformer les cartographies de photoluminescence obtenues en des cartographies de l'un des trois paramètres de performance photovoltaïque: $J_{SC}(x,y)$, $V_{OC}(x,y)$ ou $P_{elec}(x,y)$ présentées précédemment, on procède aux étapes ci-après :

- à l'étape S12, en appliquant la loi de Planck généralisée, on est capable de remonter à la tension de circuit-ouvert maximale $V_{OC}$ d'un dispositif photovoltaïque si la valeur absolue du signal de photoluminescence est connue. Cette valeur absolue est déterminée pixel par pixel et il est donc possible d'établir la cartographie de la valeur intégrée de $V_{OC}$ comme suit :

$$\Phi_{PL}(E,x,y) = A(E,x,y)\phi_{bb}(E)\left[\exp\left(\frac{qV_{oc}(x,y)}{kT}\right) - 1\right] \qquad (4)$$

Où :

- $\Phi_{PL}(E,x,y)$ est l'intensité de l'image de photoluminescence,
- $E$ est l'énergie du photon émis,
- $A(E,x,y)$ est l'absorptivité du module photovoltaïque (égale à 1 pour les longueurs d'excitation choisies),
- $\phi_{bb}(E)$ est le flux du corps noir (radiation énergétique émise par un corps non excité, qui se trouve à la température T, ce qui correspond alors à une émission pure sans absorption),
- $q$ est la charge élémentaire,
- k la constante de Boltzmann, et
- $T$ est la température du module pour chacune des deux faces actives.

Comme cette relation entre la tension de circuit-ouvert maximale $V_{OC}$ et la mesure de photoluminescence $\Phi_{PL}(E,x,y)$ n'est pas linéaire, on comprendra ici l'intérêt de l'étape de calibration S0.

Ensuite, à l'étape S13, en appliquant la relation $\beta(x,y) = \dfrac{Voc_{arr}^{elec}(x,y)}{Voc_{avant}^{elec}(x,y)}x100$, une cartographie résolue spatialement du coefficient de bifacialité du module photovoltaïque biface peut être établie avec ainsi une approche purement optique et contrôlée.

L'invention offre ainsi un outil de cartographie optique, sans contact et fiable, du coefficient de bifacialité β des modules photovoltaïques bifaciaux et permet de une caractérisation optique quantitative pouvant constituer un nouveau standard de mesure, contrôlé, répétable et cohérent pour les fabricants de modules photovoltaïques bifaciaux alimentant ainsi leurs fiches techniques.

Par ailleurs, cette caractérisation peut être directement couplée aux lignes de production d'usines de fabrication de modules photovoltaïques bifaciaux et servir donc comme outil de contrôle et de suivi de qualité quantitatif en temps réel de la production notamment des couches photovoltaïques, en améliorant alors la qualité, l'homogénéité, etc. des dépôts de ces couches, en écartant notamment les produits non conformes.

**Revendications**

1. Procédé de caractérisation optique de la qualité d'un module photovoltaïque (PV) bifacial,
   le module comportant une première face active (FAV) et une deuxième face active (FAR), opposée à la première face, et, sur chacune desdites première et deuxième faces, un empilement de couches comportant au moins une couche d'un matériau semi-conducteur à propriétés photovoltaïques et ayant une largeur de bande interdite,
   le procédé comprenant :

   - éclairer une pluralité d'éléments de surface de chaque face à l'aide d'une source lumineuse (SLM) comprenant au moins une longueur d'onde inférieure à la longueur d'onde de la largeur de bande interdite et mesurer une intensité de photoluminescence émise par chaque élément de surface de cette face à au moins la longueur d'onde de la largeur de bande interdite,
   - en fonction de la mesure d'intensité de photoluminescence émise par chaque élément de surface de chaque face, estimer un paramètre de performance photovoltaïque ($V_{OC}(x,y)$ ; $J_{SC}(x,y)$ ; $P_{elec}(x,y)$) pour cet élément de surface,
   - pour chaque élément de surface, estimer un coefficient de bifacialité comparant le paramètre de performance photovoltaïque de chaque élément de surface de la première face avec le paramètre de performance photovoltaïque d'un élément de surface homologue de la deuxième face, disposé sous l'élément de surface de la première face, et
   - établir une cartographie du coefficient de bifacialité du module.

2. Procédé selon la revendication 1, dans lequel le paramètre de performance photovoltaïque est une tension de circuit-ouvert maximale ($V_{OC}(x,y)$).

3. Procédé selon la revendication 2, dans lequel la tension de circuit-ouvert maximale $V_{OC}(x,y)$, en un élément de surface de coordonnées $(x,y)$, est liée à une grandeur $\Phi_{PL}(E,x,y)$ représentative de l'intensité de photoluminescence émise par cet élément de surface par une relation du type

$$\Phi_{PL}(E,x,y) = A(E,x,y)\phi_{bb}(E)\left[\exp\left(\frac{qV_{oc}(x,y)}{kT}\right) - 1\right] \qquad (4)$$

Où $E$ est une énergie de photon émis, $A(E,x,y)$ est une absorptivité du module photovoltaïque, $\phi_{bb}(E)$ est le flux du corps noir, $q$ est la charge élémentaire, k la constante de Boltzmann et $T$ est la température du module pour chacune des deux faces actives.

4. Procédé selon la revendication 3, dans lequel, la source lumineuse comprenant au moins une longueur d'onde inférieure à la longueur d'onde de la largeur de bande interdite, l'absorptivité du module photovoltaïque $A(E,x,y)$ est, en pratique, égale à 1.

5. Procédé selon l'une des revendications 2 à 4, dans lequel le coefficient de bifacialité pour un élément de surface de la première face et un élément de surface homologue de la deuxième face est donné par un rapport β des tensions électriques de circuit-ouvert maximales de l'élément homologue de la deuxième face $Voc_{arr}^{elec}$ et de l'élément de la première face $Voc_{avant}^{elec}$ selon une relation du type :

$$\beta = \frac{Voc_{arr}^{elec}}{Voc_{avant}^{elec}} x100$$

6. Procédé selon l'une des revendications précédentes, comportant en outre une calibration d'un détecteur recevant l'intensité de lumière émise par photoluminescence et comptant un nombre de photons correspondant à la lumière émise par photoluminescence, la calibration comportant :

- éclairer le détecteur par une source laser, constante, et mesurer une grandeur représentative d'un nombre étalon de photons reçus par le détecteur, et
- la photoluminescence émise par un élément de surface de la première face et par un élément de surface homologue de la deuxième face correspondant respectivement à des premier et deuxième nombres de photons reçus par le détecteur, diviser chacun desdits premier et deuxième nombres de photons reçus par le détecteur par la grandeur représentative dudit nombre étalon.

7. Procédé selon la revendication 1, dans lequel le paramètre de performance photovoltaïque est une puissance électrique produite et le coefficient de bifacialité est défini comme un rapport β entre les puissances électriques produites respectivement par un élément de surface homologue de la deuxième face $P_{arr}^{elec}$ et un élément de surface correspondant de la première face $P_{avant}^{elec}$ selon une relation du type :

$$\beta = \frac{P_{arr}^{elec}}{P_{avant}^{elec}} x100 \qquad (1)$$

8. Procédé selon la revendication 1, dans lequel le paramètre de performance photovoltaïque est un courant de court-circuit $J_{SC}(x,y)$ et le coefficient de bifacialité est défini comme un rapport β entre les courants de court-circuit respectivement d'un élément de surface homologue de la deuxième face $Jsc_{arr}^{elec}$ et un élément de surface correspondant de la première face $Jsc_{avant}^{elec}$ selon une relation du type :

$$\beta = \frac{Jsc_{arr}^{elec}}{Jsc_{avant}^{elec}} x100 \qquad (3)$$

9. Dispositif de caractérisation optique de la qualité d'un module bifacial de panneau photovoltaïque (PV) bifacial, pour la mise en œuvre du procédé selon l'une des revendications précédentes, comportant :

   - un banc de montage en rotation supportant le module, et capable d'appliquer une rotation de 180° du module autour d'un axe central et parallèle à un bord du module,
   - une source lumineuse (SLM) focalisée déplaçable par pas de distance choisi, pour éclairer une pluralité d'éléments de surface de chaque face, et comprenant au moins une longueur d'onde inférieure à la longueur d'onde de la largeur de bande interdite,
   - une optique de détection de lumière (CAM), déplaçable par le pas de distance choisi, pour mesurer une intensité de photoluminescence émise par chaque élément de surface de chaque face à au moins la longueur d'onde de la largeur de bande interdite,
   - et un circuit de traitement (CT) pour :

      * estimer, en fonction de la mesure d'intensité de photoluminescence émise par chaque élément de surface de chaque face, le paramètre de performance photovoltaïque ( $V_{OC}(x,y)$ ; $J_{SC}(x,y)$ ; $P_{elec}(x,y)$) pour cet élément de surface,
      * pour chaque élément de surface, estimer un coefficient de bifacialité comparant le paramètre de performance photovoltaïque de chaque élément de surface de la première face avec le paramètre de performance photovoltaïque d'un élément de surface homologue de la deuxième face, disposé sous l'élément de surface de la première face, et
      * établir la cartographie du coefficient de bifacialité du module.

10. Dispositif selon la revendication 9, comportant en outre un filtre optique coupe-bande autour de la longueur d'onde d'éclairement de la source lumineuse et disposé sur la face du module ne recevant pas l'éclairement de la source.

11. Dispositif selon la revendication 10, dans lequel le filtre optique coupe-bande est formé d'un réseau de microlentilles placé devant la face du module ne recevant pas l'éclairement.

12. Dispositif selon l'une des revendications 9 à 11, comportant en outre un filtre optique passe-haut disposé devant le détecteur pour filtrer la longueur d'onde de la source lumineuse.

13. Dispositif selon l'une des revendications 9 à 12, dans lequel le détecteur comporte une caméra infrarouge.

14. Programme informatique comportant des instructions pour la mise en œuvre du procédé selon l'une des revendications 1 à 8, lorsque lesdites instructions sont exécutées par un processeur d'un circuit de traitement.


**Patentansprüche**

1. Verfahren zur optischen Charakterisierung der Qualität eines bifazialen Photovoltaikmoduls (PV), wobei das Modul eine erste aktive Seite (FAV) und eine zweite aktive Seite (FAR) gegenüber der ersten Seite und auf jeder der ersten und zweiten Seite einen Schichtenstapel umfasst, der wenigstens eine Schicht aus einem Halbleitermaterial mit photovoltaischen Eigenschaften und einer Bandlücke umfasst,
   wobei das Verfahren umfasst:

   - Beleuchten mehrerer Oberflächenelemente jeder Seite mit einer Lichtquelle (SLM), die mindestens eine Wellenlänge aufweist, die kleiner als die Wellenlänge der Bandlücke ist, und Messen einer Photolumineszenz-Intensität, die von jedem Oberflächenelement dieser Seite mit mindestens der Wellenlänge der Bandlücke emittiert wird,
   - in Abhängigkeit von der Messung der Photolumineszenz-Intensität, die von jedem Oberflächenelement jeder Seite emittiert wird, Abschätzen eines Photovoltaik-Leistungsparameters ($V_{OC}(x, y)$; $J_{SC}(x, y)$; $P_{elec}(x, y)$) für dieses Oberflächenelement,
- für jedes Oberflächenelement, Abschätzen eines Bifazialitätskoeffizienten, der den Photovoltaik-Leistungsparameter jedes Oberflächenelements der ersten Seite mit dem Photovoltaik-Leistungsparameter eines homologen Oberflächenelements der zweiten Seite vergleicht, das unter dem Oberflächenelement der ersten Seite angeordnet ist, und
- Erstellen einer Karte des Bifazialitätskoeffizienten des Moduls.

2. Verfahren nach Anspruch 1, wobei der Photovoltaik-Leistungsparameter eine maximale Leerlaufspannung ($V_{OC}(x, y)$) ist.

3. Verfahren nach Anspruch 2, wobei die maximale Leerlaufspannung $V_{OC}(x, y)$ an einem Oberflächenelement mit Koordinaten $(x, y)$ zu einer Größe $\Phi_{PL}(E, x, y)$, die repräsentativ für die Photolumineszenz-Intensität ist, die von diesem Oberflächenelement emittiert wird, durch eine Beziehung vom Typ

$$\Phi_{PL}(E, x, y) = A(E, x, y)\phi_{bb}(E)\left[\exp\left(\frac{qV_{oc}(x, y)}{kT}\right) - 1\right] \qquad (4)$$

in Verbindung steht, wobei $E$ eine Photon-Emissionsenergie ist, $A(E, x, y)$ ein Absorptionsvermögen des Photovoltaikmoduls ist, $\Phi_{bb}(E)$ der Schwarzkörper-Fluss ist, $q$ die Elementarladung ist, $k$ die Boltzmann-Konstante ist, und $T$ die Temperatur des Moduls für jede der zwei aktiven Seiten ist.

4. Verfahren nach Anspruch 3, wobei die Lichtquelle mindestens eine Wellenlänge umfasst, die kleiner als die Wellenlänge der Bandlücke ist, wobei das Absorptionsvermögen des Photovoltaikmoduls $A(E, x, y)$ in der Praxis gleich 1 ist.

5. Verfahren nach einem der Ansprüche 2 bis 4, wobei der Bifazialitätskoeffizient für ein Oberflächenelement der ersten Seite und ein homologes Oberflächenelement der zweiten Seite durch ein Verhältnis $\beta$ der maximalen elektrischen Leerlaufspannungen des homologen Elements der zweiten Seite $V_{OC}{}_{arr}^{elec}$ und des Elements der ersten Seite $V_{OC}{}_{avant}^{elec}$ gemäß einer Beziehung vom Typ

$$\beta = \frac{Voc_{arr}^{elec}}{Voc_{avant}^{elec}} x100$$

gegeben ist.

6. Verfahren nach einem der vorhergehenden Ansprüche, ferner umfassend eine Kalibrierung eines Detektors, der die Intensität des durch Photolumineszenz emittierten Lichts empfängt und eine Anzahl von Photonen zählt, die dem durch Photolumineszenz emittierten Licht entspricht, wobei die Kalibrierung umfasst:

- Beleuchten des Detektors mit einer konstanten Laserquelle und Messen einer Größe, die für eine Standardanzahl von Photonen repräsentativ ist, die vom Detektor empfangen werden, und
- jeweils Dividieren einer ersten und zweiten Anzahl von Photonen, die vom Detektor empfangen werden, durch die Größe, die für die Standardanzahl repräsentativ ist, wobei die Photolumineszenz, die von einem Oberflächenelement der ersten Seite bzw. von einem homologen Oberflächenelement der zweiten Seite emittiert wird, der ersten bzw. zweiten Anzahl von Photonen entspricht, die vom Detektor empfangen werden.

7. Verfahren nach Anspruch 1, wobei der Photovoltaik-Leistungsparameter eine erzeugte elektrische Leistung ist und der Bifazialitätskoeffizient als ein Verhältnis $\beta$ zwischen den elektrischen Leistungen definiert ist, die jeweils von einem homologen Oberflächenelement der zweiten Seite $P_{arr}^{elec}$ und einem entsprechenden Oberflächenelement der ersten Seite $P_{avant}^{elec}$ erzeugt werden, gemäß einer Beziehung vom Typ

$$\beta = \frac{P_{arr}^{elec}}{P_{avant}^{elec}} x100$$

.

**8.** Verfahren nach Anspruch 1, wobei der Photovoltaik-Leistungsparameter ein Kurzschlussstrom *Jsc(x, y)* ist und der Bifazialitätskoeffizient als ein Verhältnis β zwischen den jeweiligen Kurzschlussströmen eines homologen Oberflächenelements der zweiten Seite $J_{SC}{}_{arr}^{elec}$ und eines entsprechenden Oberflächenelements der ersten Seite $J_{SC}{}_{avant}^{elec}$ definiert ist, gemäß einer Beziehung vom Typ

$$\beta = \frac{Jsc_{arr}^{elec}}{Jsc_{avant}^{elec}} x100$$

**9.** Vorrichtung zur optischen Charakterisierung der Qualität eines bifazialen Photovoltaik-Moduls (PV) zur Implementierung des Verfahrens nach einem der vorhergehenden Ansprüche, umfassend:

- eine drehbare Montagebank, die das Modul trägt und dazu in der Lage ist, eine Drehung des Moduls um 180° um eine Achse auszuführen, die zentral und parallel zu einer Kante des Moduls verläuft;
- eine fokussierte Lichtquelle (SLM), die in ausgewählten Abstandsschritten bewegbar ist, um mehrere Oberflächenelemente jeder Seite zu beleuchten, und die mindestens eine Wellenlänge umfasst, die kleiner als die Wellenlänge der Bandlücke ist;
- eine Lichtdetektionsoptik (CAM), die um den gewählten Abstandsschritt bewegbar ist, um eine Photolumineszenz-Intensität zu messen, die von jedem Oberflächenelement jeder Seite bei mindestens der Wellenlänge der Bandlücke emittiert wird;
- und eine Verarbeitungsschaltung (CT) zum:

* Abschätzen, in Abhängigkeit von der Messung der Photolumineszenz-Intensität, die von jedem Oberflächenelement jeder Seite emittiert wird, des Photovoltaik-Leistungsparameters ($V_{OC}(x, y)$; $J_{SC}(x, y)$; $P_{elec}(x, y)$) für dieses Oberflächenelement,
* für jedes Oberflächenelement, Abschätzen eines Bifazialitätskoeffizienten, der den Photovoltaik-Leistungsparameter jedes Oberflächenelements der ersten Seite mit dem Photovoltaik-Leistungsparameter eines homologen Oberflächenelements der zweiten Seite vergleicht, das unter dem Oberflächenelement der ersten Seite angeordnet ist, und
* Erstellen der Karte des Bifazialitätskoeffizienten des Moduls.

**10.** Vorrichtung nach Anspruch 9, ferner umfassend ein optisches Kerbfilter um die Wellenlänge der Beleuchtung der Lichtquelle herum und angeordnet auf der Seite des Moduls, welche die Beleuchtung nicht von der Quelle empfängt.

**11.** Vorrichtung nach Anspruch 10, wobei das optische Kerbfilter aus einer Anordnung von Mikrolinsen gebildet ist, die vor der Seite des Moduls angeordnet ist, die keine Beleuchtung erhält.

**12.** Vorrichtung nach einem der Ansprüche 9 bis 11, ferner umfassend ein optisches Hochpassfilter, das vor dem Detektor angeordnet ist, um die Wellenlänge der Lichtquelle zu filtern.

**13.** Vorrichtung nach einem der Ansprüche 9 bis 12, wobei der Detektor eine Infrarotkamera umfasst.

**14.** Computerprogramm, umfassend Anweisungen zum Durchführen des Verfahrens gemäß einem der Ansprüche 1 bis 8, wenn diese Anweisungen von einem Prozessor einer Verarbeitungsschaltung ausgeführt werden.

**Claims**

1. A method for optical characterisation of the quality of a bifacial photovoltaic module (PV), the module including a first active face (FAV) and a second active face (FAR), opposite to the first face, and, on each of said first and second faces, a stack of layers including at least one layer of a semiconductor material with photovoltaic properties and having a band gap, the method comprising:

   - illuminating a plurality of surface elements on each face using a light source (SLM) comprising at least one wavelength less than the wavelength of the band gap and measuring a photoluminescence intensity emitted by each surface element of this face at least at the wavelength of the band gap,
   - according to the measurement of photoluminescence intensity emitted by each surface element of each face, estimating a photovoltaic performance parameter ($V_{oc}(x, y)$; $J_{SC}(x, y)$; $P_{elec}(x, y)$) for this surface element,
   - for each surface element, estimating a bifaciality coefficient comparing the photovoltaic performance parameter of each surface element of the first face with the photovoltaic performance parameter of a homologous surface element of the second face, disposed under the surface element of the first face, and
   - establishing a mapping of the bifaciality coefficient of the module.

2. The method according to claim 1, wherein the photovoltaic performance parameter is a maximum open-circuit voltage ($V_{OC}(x, y)$).

3. The method according to claim 2, wherein the maximum open-circuit voltage $V_{OC}(x, y)$, at a surface element of coordinates $(x, y)$, is related to a quantity $\Phi_{PL}(E, x, y)$ representative of the photoluminescence intensity emitted by this surface element by a relation of the type

$$\Phi_{PL}(E, x, y) = A(E, x, y)\phi_{bb}(E)\left[\exp\left(\frac{qV_{oc}(x, y)}{kT}\right) - 1\right] \qquad (4)$$

   where E is an emitted photon energy, $A(E, x, y)$ is an absorptivity of the photovoltaic module, $\phi_{bb}(E)$ is the flux of the black body, q is the elementary charge, k the Boltzmann constant and T is the module temperature for each of the two active faces.

4. The method according to claim 3, wherein, the light source comprising at least one wavelength less than the wavelength of the band gap, the absorptivity of the photovoltaic module $A(E, x, y)$ is, in practice, equal to 1.

5. The method according to one of claims 2 to 4, wherein the bifaciality coefficient for a surface element of the first face and a homologous surface element of the second face is given by a ratio $\beta$ of the maximum electrical open-circuit voltages of the homologous element of the second face $V_{OC}^{elec}{}_{rear}$ and of the element of the first face $V_{OC}^{elec}{}_{front}$ according to a relation of the type:

$$\beta = \frac{Voc_{rear}^{elec}}{Voc_{front}^{elec}} x100$$

6. The method according to one of the preceding claims, further including a calibration of a detector receiving the intensity of light emitted by photoluminescence and counting a number of photons corresponding to the light emitted by photoluminescence, the calibration including:

   - illuminating the detector with a constant laser source and measuring a quantity representative of a standard number of photons received by the detector, and
   - the photoluminescence emitted by a surface element of the first face and by a homologous surface element of the second face corresponding respectively to first and second numbers of photons received by the detector, dividing each of said first and second numbers of photons received by the detector by the quantity representative of said standard number.

7. The method according to claim 1, wherein the photovoltaic performance parameter is a produced electrical power and the bifaciality coefficient is defined as a ratio β between the electrical powers produced respectively by a homologous surface element of the second face $P_{rear}^{elec}$ and a corresponding surface element of the first face $P_{front}^{elec}$ according to a relation of the type:

$$\beta = \frac{P_{rear}^{elec}}{P_{front}^{elec}} x100 \qquad (1)$$

8. The method according to claim 1, wherein the photovoltaic performance parameter is a short-circuit current Jsc (x, y) and the bifaciality coefficient is defined as a ratio β between the short-circuit currents respectively of a homologous surface element of the second face $J_{SC_{rear}}^{elec}$ and a corresponding surface element of the first face $J_{SC_{front}}^{elec}$ according to a relation of the type:

$$\beta = \frac{Jsc_{rear}^{elec}}{Jsc_{front}^{elec}} x100 \qquad (3)$$

9. A device for optical characterisation of the quality of a bifacial module of a bifacial photovoltaic panel (PV), for the implementation of the method according to one of the preceding claims, including:

   - a rotating assembly bench supporting the module, and capable of applying a 180° rotation of the module around a central axis and parallel to one edge of the module,
   - a focused light source (SLM) displaceable by a selected distance pitch, to illuminate a plurality of surface elements of each face, and comprising at least one wavelength less than the wavelength of the band gap,
   - a light detection optics (CAM), displaceable by the selected distance pitch, to measure a photoluminescence intensity emitted by each surface element of each face at least at the wavelength of the band gap,
   - and a processing circuit (CT) for:

      * estimating, based on the measurement of the photoluminescence intensity emitted by each surface element of each face, the photovoltaic performance parameter ($V_{oc}$ (x, y); $J_{SC}$ (x, y); $P_{elec}$ (x, y)) for this surface element,
      * for each surface element, estimating a bifaciality coefficient comparing the photovoltaic performance parameter of each surface element of the first face with the photovoltaic performance parameter of a homologous surface element of the second face, disposed under the surface element of the first face, and
      * establishing the mapping of the bifaciality coefficient of the module.

10. The device according to claim 9, further including an optical notching filter around the illumination wavelength of the light source and disposed on the face of the module that does not receive the illumination from the source.

11. The device according to claim 10, wherein the optical notching filter is formed of an array of micro-lenses placed in front of the face of the module that does not receive illumination.

12. The device according to one of claims 9 to 11, further including an optical highpass filter disposed in front of the detector to filter the wavelength of the light source.

13. The device according to one of claims 9 to 12, wherein the detector includes an infrared camera.

14. A computer program including instructions for implementing the method according to one of claims 1 to 8, when said instructions are executed by a processor of a processing circuit.

FIG. 1

FIG. 2

```
        ┌─────────────────────┐
S0 ┤    │     Rep (CAM)       ├──── S20
        └─────────┬───────────┘
                  │
                  ▼
        ┌─────────────────────┐
        │     FIB → CAM       ├──── S21
        └─────────┬───────────┘
                  │
                  ▼
        ┌─────────────────────┐
        │     SPAT / NPh      ├──── S22
        └─────────┬───────────┘
                  │
                  ▼
        ┌─────────────────────┐
        │     RAPP (DET)      ├──── S23
        └─────────────────────┘
```

# FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

• Evaluating Performance Loss and Predicting Efficiency Gain of Bifacial Silicon Solar Cells. **HO JIAN WEI et al.** 2018 IEEE 7TH WORLD CONFERENCE ON PHOTOVOLTAIC ENERGY CONVERSION (WCPEC) (A JOINT CONFERENCE OF 45TH IEEE PVSC, 28TH PVSEC & 34TH EU PVSEC). IEEE, 10 Juin 2018, 3484-3488